# DEMANDE DE BREVET EUROPEEN

(11) **EP 4 060 577 A1**
(43) Date de publication de la demande: **21.09.2022**
(21) Numéro de dépôt: 21163751.7
(22) Date de dépôt: 19.03.2021
(51) Int. Cl.: G06Q 10/06, G08G 5/06

(54) **PROCÉDÉ D'OPTIMISATION DE LA GESTION ÉNERGÉTIQUE D'UN ENSEMBLE AÉRONAUTIQUE POUR UNE RÉDUCTION DES ÉMISSIONS DE GAZ À EFFET DE SERRE ET PLATEFORME NUMÉRIQUE ASSOCIÉE**

(71) Demandeur: Revima Group, 76490 Rives-en-Seine (FR)
(72) Inventeur: BOURGUEIL, Marie-Laure, 76490 RIVES-EN-SEINE (FR); BEAUJARD, Jean-Philippe, 76490 RIVES-EN-SEINE (FR); HODAC, Olivier, 76490 RIVES-EN-SEINE (FR); TRZECIAKOWSKA, Magdalena, 76490 RIVES-EN-SEINE (FR); MICHEL, Christophe, 76490 RIVES-EN-SEINE (FR); MORNAND, Xavier, 76490 RIVES-EN-SEINE (FR); HY, Olivier, 76490 RIVES-EN-SEINE (FR)
(74) Mandataire: Ipside

(57) **Abrégé**

Procédé (500) d'optimisation de la gestion énergétique et de réduction des émissions de gaz à effet de serre d'un ensemble aéronautique (100) complexe comprenant au moins un aéronef (10) et un groupe auxiliaire de puissance (11) dit APU, ledit procédé analysant, de façon centralisée à l'extérieur de l'ensemble aéronautique, des données provenant de l'ensemble aéronautique pour comparer au moins un état d'un paramètre dudit ensemble à un état optimal prédéterminé dudit paramètre, et comprenant : une étape (510) de collecte de données, lesdites données comprenant des données mesurées par des capteurs (31, 111) de l'ensemble aéronautique ; une étape (520) de transmission des données collectées à une plateforme numérique (200) de traitement et d'analyse ; une étape (530) de traitement des données par la plateforme mettant en œuvre des algorithmes d'apprentissage automatique ; une étape (540) d'affichage d'informations relatives aux données traitées sur un tableau de bord accessible via différents terminaux (300) ; et une étape (555) d'alerte en temps réel en cas de détection (550) d'une anomalie dans l'ensemble aéronautique.

## Description

### DOMAINE TECHNIQUE

La présente invention appartient au domaine de l'aéronautique, notamment la gestion énergétique d'un ensemble aéronautique comprenant au moins un aéronef et des équipements tels que des groupes auxiliaires de puissance, et concerne plus particulièrement un procédé d'optimisation de la gestion énergétique d'un tel ensemble pour une réduction de ses émissions de gaz à effet de serre (ci-après « GES ») et de ses consommations énergétiques, ainsi qu'une plateforme numérique permettant la mise en œuvre d'un tel procédé.

### ÉTAT DE LA TECHNIQUE

Dans un contexte économique de plus en plus concurrentiel, les entreprises doivent mener leurs activités de manière toujours plus efficace et rentable, surtout dans les industries hautement mondialisées telles que l'aéronautique et l'aviation commerciale et militaire. En conséquence, les inefficacités qui étaient autrefois tolérées par les entreprises, en raison de la nature cloisonnée des clients et des fournisseurs, doivent maintenant être supprimées ou atténuées afin que les entreprises puissent être effectivement compétitives sur un marché mondial très dynamique. En outre, l'intérêt grandissant pour des exploitations écoresponsables qui respectent l'environnement constitue une motivation supplémentaire pour minimiser les émissions polluantes, les pertes inutiles et assurer un processus fiable et sûr.

Dans des aéronefs en service, tels que des avions de ligne, de nombreux équipements embarqués font l'objet d'une surveillance continue et de maintenances régulières pour limiter le risque sécuritaire lié à un éventuel dysfonctionnement de ces équipements.

Par exemple, les groupes auxiliaires de puissance APU (*Auxiliary Power Unit* en terminologie anglosaxonne) sont destinés à produire de l'énergie à bord des avions pour permettre au sol (moteurs arrêtés) d'alimenter les différents systèmes de bord en fournissant les générations électriques et/ou pneumatique. Les APU peuvent également être utilisés en vol. Afin de réduire la consommation de carburant de l'avion, les émissions de GES ou en cas de panne de l'APU, il est nécessaire d'avoir au sol des groupes de parc (alimentation électrique, pression hydraulique) tels que les GPU (*Ground Power Unit* en terminologie anglosaxonne) et un groupe de démarrage (pression pneumatique).

En règle générale, la gestion des opérations d'alimentation en énergie d'un avion au sol nécessite l'intervention de plusieurs acteurs parmi les sociétés MRO, les opérateurs aéroportuaires et le personnel au sol technique de la compagnie aérienne exploitant l'avion.

La multiplication des acteurs cause une complexité dans l'intervention et un manque d'efficacité opérationnelle. En effet, les acteurs impliqués travaillent pour un même objectif, se trouvent souvent à proximité les uns des autres, mais ne partagent pas efficacement les informations utiles. Cela occasionne une perte de temps, une augmentation inutile des couts, et des émissions de GES qui auraient pu être évitées.

De plus, une utilisation non optimisée des ressources APU/GPU s'accompagne nécessairement d'un gaspillage énergétique, d'une augmentation des coûts d'exploitation pour les compagnies aériennes et d'émissions inutiles de GES.

Une gestion énergétique efficace de ces équipements, notamment des APU, se révèle donc être nécessaire pour d'une part préserver lesdits équipements et éviter des pannes prématurées, et d'autre part diminuer leur consommation énergétique et leurs émissions polluantes.

Le document US10752376B2 décrit un système de préparation avant vol pour aéronef, comprenant un ou plusieurs modules d'alimentation électrique. Un contrôleur intégré est couplé électriquement et de manière communicative aux modules d'alimentation pour surveiller et commander lesdits modules afin de fournir de l'énergie électrique aux sous-systèmes de l'aéronef. Un dispositif mobile tel qu'un smartphone peut se connecter au contrôleur intégré pour lui communiquer des instructions de préparation avant le vol de l'aéronef et pour surveiller l'état de cette préparation avant le vol. De plus, ce document décrit un procédé de pré conditionnement d'un aéronef comprenant la détermination d'un état de charge d'un APU et l'activation d'un sous-système de contrôle environnemental pour préconditionner l'aéronef en ajustant une température actuelle selon un profil de pré-conditionnement basé sur un ou plusieurs paramètres parmi : une température cible, un temps cible, une température actuelle, une température de l'air extérieur, une quantité d'énergie et un état de charge de l'APU.

Cette solution n'exploite que des données spécifiques à un seul aéronef et ne permet aucune connaissance globale de l'environnement dans lequel évolue l'aéronef comme l'aéroport ou l'état d'autres aéronefs appartenant à la même compagnie par exemple.

Le document FR3019358B1 décrit un procédé et un dispositif de gestion globale optimisée d'un réseau énergétique d'un aéronef comprenant une pluralité d'équipements énergétiques, caractérisé en ce qu'il comprend un module de sélection d'au moins un objectif d'optimisation parmi une pluralité d'objectifs prédéterminés, un module de réception de données d'équipements, un module de réception de données d'aéronef, et un module de détermination de consignes de fonctionnement des équipements énergétiques à partir des données d'équipements et des données d'aéronef adaptées pour atteindre au moins un objectif d'optimisation sélectionné.

Cette solution ne permet pas d'anticiper des anomalies à partir des données disponibles, se limite à un seul aéronef, pareillement à la solution précédente, et n'offre aucune visualisation intuitive et simplifiée des données sachant qu'un des problèmes majeurs en MRO est la complexité des informations fournies aux opérateurs, ces derniers étant parfois induits en erreur. Cette solution ne permet pas non plus d'apporter des recommandations pour la réduction de la consommation énergétique et des émissions de GES.

### PRÉSENTATION DE L'INVENTION

La présente invention vise à pallier les inconvénients de l'art antérieur exposés ci-avant et propose une solution globale pour optimiser la gestion énergétique et réduire les émissions de GES d'un ensemble aéronautique complexe comprenant au moins un aéronef et des équipements externes audit aéronef, notamment lors d'opérations au sol, afin de soutenir les compagnies aériennes dans leurs opérations au sol (maîtrise et réduction des coûts et des émissions polluantes), en leur proposant une plateforme numérique centralisée permettant d'exploiter en temps réel, via des modèles d'apprentissage automatique entre autres, les données provenant des aéronefs et de leurs équipements connectés dans le but d'optimiser leurs opérations.

La présente invention a également pour objectif d'apporter des recommandations techniques et/ou opérationnelles pour diminuer la consommation énergétique des aéronefs et de leurs équipements grâce à cette gestion optimisée, et donc d'améliorer l'empreinte écologique de l'exploitation d'un aéronef et des équipements externes.

À cet effet, la présente invention a pour objet un procédé, mis en œuvre par ordinateur, pour optimiser la gestion énergétique et réduire les émissions, en particulier les émissions de gaz à effet de serre, d'un ensemble aéronautique comprenant au moins un aéronef et un groupe auxiliaire de puissance dit APU, ledit procédé analysant, de façon centralisée à l'extérieur de l'ensemble aéronautique, des données provenant dudit ensemble pour comparer au moins un état d'un paramètre dudit ensemble à un état optimal prédéterminé dudit paramètre.

Ce procédé est remarquable en ce qu'il comprend :
- une étape de collecte de données, lesdites données comprenant des données mesurées par des capteurs de l'ensemble aéronautique ;
- une étape de transmission des données collectées à une plateforme numérique de traitement et d'analyse, extérieure à l'ensemble aéronautique ;
- une étape de traitement des données par la plateforme, mettant en œuvre des algorithmes d'apprentissage automatique, pour prédire un état non optimal d'un paramètre, telle qu'une surconsommation énergétique ou une sollicitation sous optimale d'un point de vue environnemental des différentes options d'alimentation énergétique de l'aéronef, dans l'ensemble aéronautique et/ou pour recommander des actions en vue d'amener l'état dudit paramètre au plus proche de l'état optimal ;
- une étape d'affichage d'informations relatives aux données traitées sur un tableau de bord accessible via différents terminaux ; et
- une étape d'alerte en temps réel en cas de détection d'une anomalie dans l'ensemble aéronautique.

Avantageusement, l'étape de collecte de données est réalisée en temps réel et en continu pour limiter les risques liés à des interventions tardives et pour suivre l'évolution précise des paramètres fonctionnels mesurés.

Selon un mode de réalisation particulièrement avantageux, les données mesurées comprennent des données provenant de l'APU de chaque aéronef de l'ensemble aéronautique. Cela permet de réaliser un suivi amélioré des APU qui sont des équipements critiques.

Selon un mode de réalisation, l'ensemble aéronautique comprend, au moins pour une durée déterminée, au moins un équipement externe tel qu'un groupe de puissance au sol GPU pourvu d'au moins un capteur mesurant un paramètre fonctionnel, ledit équipement étant apte à communiquer avec la plateforme numérique notamment pour transmettre les données mesurées par ledit capteur. Cela permet par exemple à une compagnie aérienne de connaitre l'état des GPU disponibles sur un aérodrome donné et de pouvoir les utiliser au sol en remplacement d'un APU lorsque le maintien en marche dudit APU n'est pas recommandé par la plateforme.

De façon avantageuse, l'étape de traitement des données permet notamment de calculer une consommation énergétique, électrique et/ou fossile, d'un ou de plusieurs éléments de l'ensemble aéronautique, et d'estimer une émission de particules polluantes telles que le dioxyde de carbone (CO₂) et les oxydes d'azote (NOₓ) par l'aéronef ou les aéronefs d'une compagnie aérienne.

Selon un mode de réalisation, les algorithmes d'apprentissage automatique exécutés lors de l'étape de traitement des données comprennent des modèles prédictifs configurés pour prédire des anomalies dans un élément de l'ensemble aéronautique telles que des surconsommations énergétiques ou des pannes. Ces modèles prédictifs peuvent par exemple être entrainés sur des données historiques et calibrés sur les types d'aéronefs, d'équipements, etc.

Selon l'invention, la détection d'une anomalie dans un élément de l'ensemble aéronautique est basée sur une comparaison d'au moins une valeur mesurée pour un paramètre fonctionnel de l'élément avec au moins une valeur de référence correspondant à un fonctionnement optimal prédéterminé.

Les paramètres en question comprennent, non exclusivement, la durée du transit, la température extérieure, les conditions d'utilisation de l'APU dans un ou plusieurs aéroports, le nombre de GPU disponibles, etc.

De façon particulièrement avantageuse, l'étape d'alerte s'accompagne d'une notification multicanal à différents utilisateurs, sur différentes interfaces (portail web, application mobile, etc.).

Selon un mode de réalisation avantageux, l'étape de recommandation propose des actions différentes aux utilisateurs de la plateforme en fonction de la compétence et de l'habilitation de chaque utilisateur. Par exemple, en cas d'utilisation simultanée de l'APU et du GPU, la plateforme recommande immédiatement à la compagnie aérienne l'arrêt de l'APU pour éviter une utilisation inutile de l'APU et une surconsommation de carburant entrainant des émissions polluantes dans l'aéroport. L'invention a également pour objet une plateforme numérique comprenant des moyens informatiques de calcul et de stockage, apte à communiquer sur un réseau sans-fil, et configurée pour mettre en œuvre un procédé d'optimisation de la gestion énergétique et de réduction des émissions de gaz à effet de serre d'un ensemble aéronautique, tel que présenté.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un procédé d'optimisation de la gestion énergétique et de réduction des émissions de gaz à effet de serre d'un ensemble aéronautique et d'une plateforme numérique associée, conformes aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés de manière schématique et ne sont pas nécessairement à la même échelle. Sur l'ensemble des figures, les éléments identiques ou équivalents portent la même référence numérique.

Il est ainsi illustré en :
- Figure 1 : une vue de dessus d'un aéronef stationné au sol et sur lequel interviennent des équipements externes ;
- Figure 2 : une vue de côté d'un aéronef avec APU apparent et GPU électriquement connecté ;
- Figure 3 : un ensemble d'aéronefs d'une même compagnie aérienne en service sur un réseau d'aéroports desservis par la compagnie ;
- Figure 4 : une architecture informatique globale pour la mise en œuvre d'un procédé selon l'invention ;
- Figure 5 : les principales étapes d'un procédé selon un mode de réalisation de l'invention ;
- Figure 6 : un exemple schématique de mise en œuvre du procédé ;
- Figure 7 : un exemple de tableau de bord sur web pour la visualisation des informations fournies par la plateforme de mise en œuvre du procédé ;
- Figure 8 : un exemple d'une séquence d'alerte et de notification en cas d'anomalie ;
- Figure 9 : un exemple de rubrique s'affichant sur une application mobile associée à la plateforme numérique.

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un procédé d'optimisation de la gestion énergétique et de réduction des émissions de GES d'un ensemble aéronautique, destiné principalement au contrôle en temps réel d'un groupe auxiliaire de puissance et analogues. Cet exemple, non limitatif, est donné pour une meilleure compréhension de l'invention et n'exclut pas la mise en œuvre du procédé pour le contrôle en temps réel de tout autre équipement aéronautique qu'il soit embarqué dans l'aéronef ou au sol.

Dans la suite de la description, les sigles anglosaxons APU (*Auxiliary Power Unit*)*,* GPU (*Ground Power Unit*)*,* ACU (*Air Conditioning Unit*) et MRO (*Maintenance, Repair and Overhaul*) désignent respectivement un groupe auxiliaire de puissance, un groupe de parc, un groupe de climatisation et la maintenance, réparation et révision. L'expression « objet connecté » renvoie à un objet équipé de moyens aptes à communiquer, de façon autonome, avec d'autres objets connectés sur un réseau de type internet.

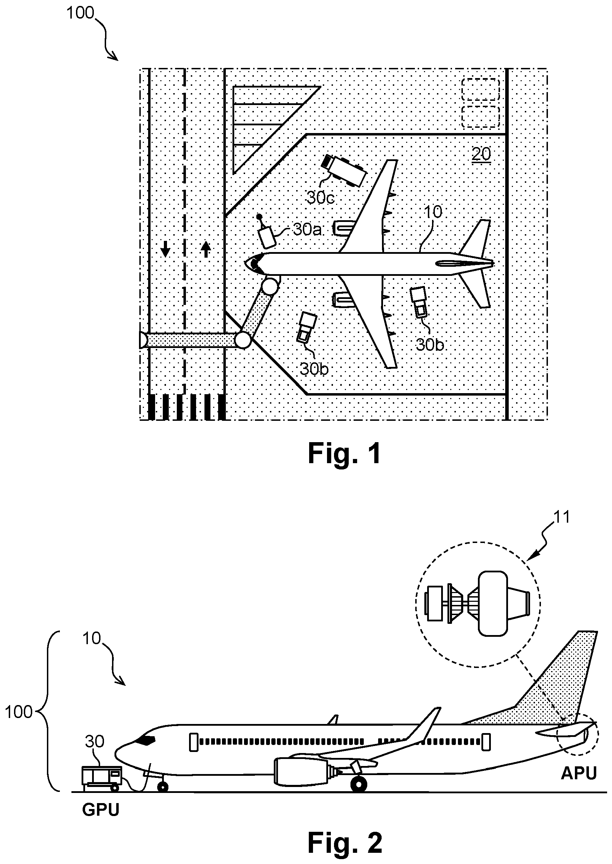

La figure 1 représente un aéronef 10, de type avion de ligne, sur une aire de stationnement (tarmac) d'un aérodrome, l'aéronef ayant quitté la piste après un atterrissage et s'apprêtant à la rejoindre à nouveau pour un décollage. Dans l'intervalle, des opérations sont réalisées sur l'aéronef 10, notamment l'embarquement et/ou le débarquement des voyageurs, le chargement et/ou le déchargement du fret, l'avitaillement en carburant et la maintenance.

Concernant les opérations d'avitaillement en carburant et de maintenance, des équipements appropriés, sous forme de véhicules, sont précipités à proximité de l'aéronef 10 en vue d'effectuer des interventions spécifiques préalablement programmées ou, le cas échéant, décidées à la suite d'imprévus. Les interventions nécessaires peuvent être effectuées simultanément par différents acteurs (opérateurs aéroportuaires, MRO, personnel au sol technique de la compagnie aérienne exploitant l'aéronef, etc.).

Les équipements en question comprennent par exemple des groupes de puissance 30a tels que des GPU, des groupes utilitaires, ou de support, (climatisation, eau, etc.) 30b tels que des ACU, des avitailleurs 30c, ainsi que tout autre équipement nécessaire aux opérations sol (*Aircraft ground handling* en terminologie anglosaxonne). Ces équipements seront génériquement désignés par la référence numérique 30.

Au vu de leurs multiples interactions, l'aéronef 10 et les équipements 30 évoluent dans un système complexe et peuvent être regroupés au sein d'un ensemble aéronautique 100 permettant la mise en œuvre d'un procédé selon l'invention pour optimiser la gestion énergétique de chaque élément dudit ensemble.

L'ensemble aéronautique 100 peut être défini de différentes manières selon les objectifs industriels visés par le procédé de l'invention.

L'ensemble aéronautique 100 peut aussi bien être fixe et comprendre toujours les mêmes éléments (même(s) aéronef(s) et même(s) équipement(s)), que variable et changer d'éléments selon des règles précises. Dans ce dernier cas, l'ensemble aéronautique 100 peut par exemple être défini en référence soit à une zone donnée, délimitée sur un aérodrome donné, et comprendre donc tous les éléments contenus dans ladite zone, soit à une compagnie aérienne donnée, ou à une alliance de compagnies aériennes, et comprendre tous les aéronefs actifs de la flotte, soit à un aéroport donné ou à un réseau d'aéroports donné. L'ensemble aéronautique 100 peut également être défini en combinant des éléments fixes et des éléments variables.

Dans tous les cas, l'ensemble aéronautique 100 doit comprendre au moins un aéronef 10. De ce fait, l'ensemble aéronautique 100 comprend nécessairement des systèmes embarqués de l'aéronef 10 tels que l'APU, qui seront désignés « équipements internes » par opposition aux « équipements externes » précités (GPU, ACU, etc.).

La figure 2 représente un exemple d'ensemble aéronautique 100 comprenant un aéronef 10, un APU 11 de l'aéronef, en tant qu'équipement interne, et un GPU 30 en tant qu'équipement externe. Le GPU est ici connecté électriquement à l'aéronef 10.

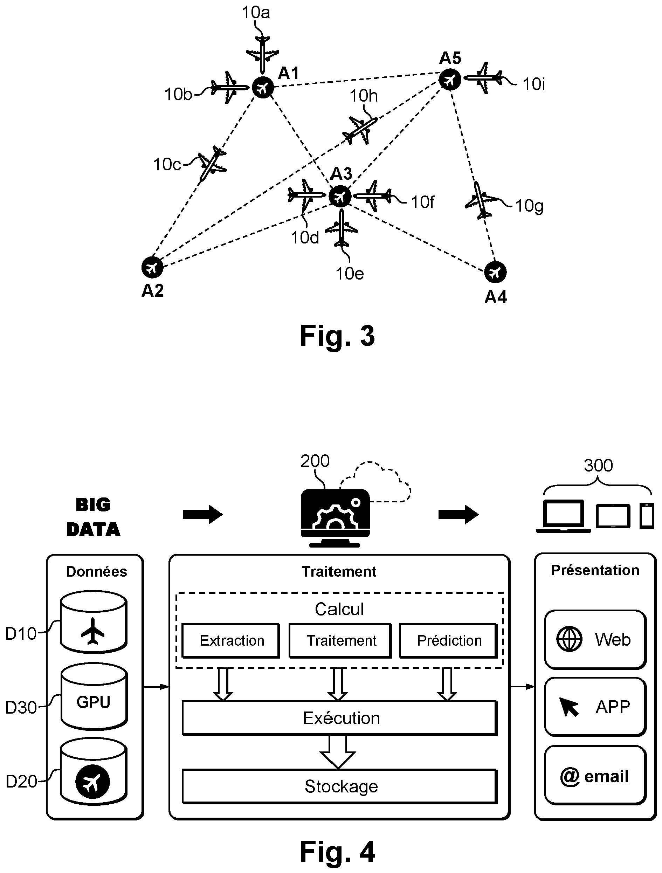

La figure 3 représente une pluralité d'aéronefs 10a à 10i opérés par une compagnie aérienne sur un réseau d'aéroports A1 à A5 desservis par ladite compagnie. Parmi les aéronefs représentés, certains sont en vol (10c, 10g et 10h) et d'autres au sol, stationnés dans certains aéroports (A1, A3 et A5).

Les aéronefs et les aéroports de l'exemple simplifié de la figure 3 peuvent être regroupés dans un ensemble aéronautique pour la mise en œuvre du procédé de l'invention. La complexité d'un tel ensemble et la quantité de données qu'il est capable de générer augmentent avec le nombre d'éléments (aéronefs et aéroports). Néanmoins, la mise en œuvre du procédé de l'invention sur un tel ensemble n'est qu'une multiplication de sa mise en œuvre sur chacun des éléments constitutifs de l'ensemble pris indépendamment. Par conséquent, la description du procédé peut être faite à partir d'un ensemble aéronautique simplifié tel que celui des figures 1 et 2, tout en restant valable pour un ensemble aéronautique plus complexe, dans la limite des conditions définies ci-avant.

Le procédé d'optimisation de la gestion énergétique d'un ensemble aéronautique permet principalement d'exploiter des données collectées à partir de différentes sources (aéronefs, équipements internes/externes, aéroports, et éventuellement compagnies aériennes) pour fournir aux utilisateurs un outil efficace d'aide à la décision leur permettant d'améliorer considérablement leurs interventions, surtout d'un point de vue logistique, et de limiter au maximum toute consommation énergétique inutile dans l'ensemble aéronautique.

La figure 4 représente une architecture informatique globale permettant d'exploiter les données selon le procédé de l'invention, celle-ci s'organise en trois paradigmes : la collecte des données, le traitement des données et la présentation d'information en vue de susciter l'action d'un utilisateur.

La collecte des données se fait au moyens de capteurs installés sur les éléments de l'ensemble aéronautique. Par exemple, les équipements internes d'un aéronef disposent de capteurs qui mesurent différents paramètres physiques, techniques ou autres.

Les paramètres mesurés par les capteurs de l'ensemble aéronautique sont envoyés, en temps réel ou à intervalles de temps réguliers, sur une plateforme d'analyse 200 non embarquée, au moyen d'un réseau sans-fil. Sur requête de moyens de calcul de ladite plateforme, des paramètres leur sont transmis par des serveurs adaptés. Ces moyens opèrent ensuite une série de calculs en exécutant des programmes dédiés. Parmi les programmes installés sur la plateforme 200, certains réalisent une simple présentation, interactive ou non, des données collectées, d'autres procèdent à une interprétation et à une représentation multiforme des données, et d'autres encore compilent des algorithmes d'intelligence artificielle pour prédire des informations non disponibles en l'état, afin de fournir les recommandations nécessaires pour optimiser les consommations énergétiques et les émissions de l'ensemble aéronautique.

Ainsi, un contrôle « intelligent » de l'ensemble aéronautique 100, notamment en termes de gestion énergétique, peut être réalisé suivant le procédé de l'invention.

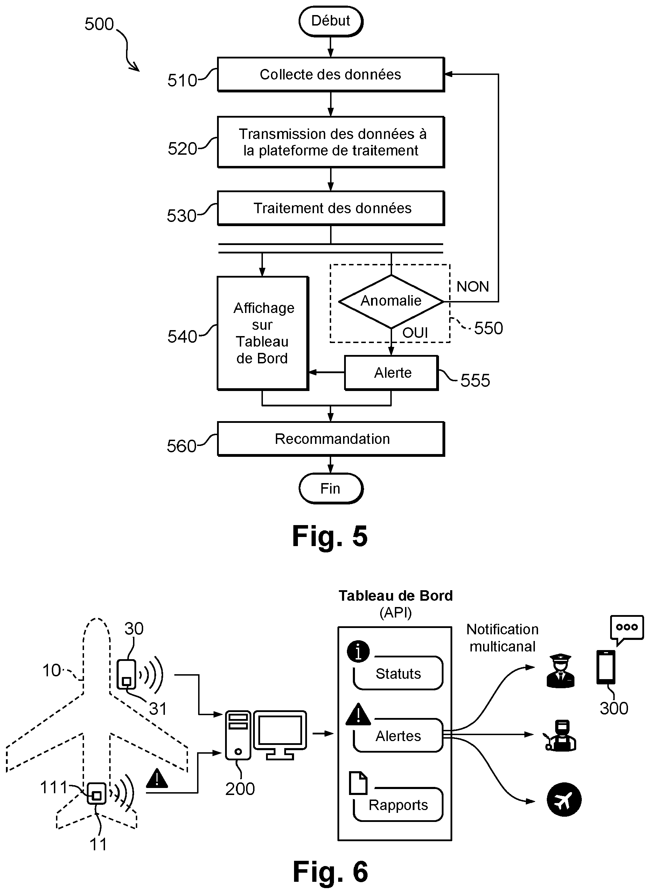

La figure 5 représente les principales étapes d'un procédé d'optimisation de la gestion énergétique d'un ensemble aéronautique, ce procédé comprenant :
- une étape initiale 510 de collecte de données ;
- une étape 520 de transmission des données collectées à une plateforme de traitement ;
- une étape 530 de traitement des données ;
- une étape 540 d'affichage des données traitées via une interface dédiée ;
- une étape conditionnelle 550 de détection d'anomalie ;
- une étape 555 d'alerte en temps réel en cas d'anomalie ;
- une étape 560 de recommandation d'une ou de plusieurs actions adéquates.

La figure 6 illustre un exemple de mise en œuvre des étapes du procédé ci-dessus dans le cas d'un ensemble aéronautique comprenant un aéronef 10 et au moins un équipement externe 30 tel qu'un GPU, ledit aéronef comprenant au moins un équipement interne 11 tel qu'un APU.

L'équipement interne 11 et l'équipement externe 30 comprennent chacun un ou plusieurs capteurs 111 et 31 mesurant des paramètres de fonctionnement de l'équipement.

Les capteurs des équipements effectuent des mesures en temps réel et en continu, et transmettent les données collectées à la plateforme numérique de traitement 200 via un réseau adapté quelconque tel qu'un réseau compatible avec l'internet des objets IoT (*Internet of Things*). A cet effet, les équipements de l'ensemble aéronautique sont aptes à communiquer sur un tel réseau, ou comportent, intégrés, des boitiers électroniques « intelligents » qui permettent à la fois de collecter les données mesurées et de les transmettre.

Après leur traitement par les moyens de calcul de la plateforme 200, les données sont affichées sur un tableau de bord sous forme exploitable, de préférence intuitive et simplifiée, en employant des techniques d'exploration des données par exemple. Ce tableau de bord peut être conçu comme interface de programmation applicative API (*Application Programming Interface*) et accessible depuis plusieurs terminaux 300 tels que les dispositifs personnels de communication (smartphones, tablettes numériques, ordinateurs, etc.) représentés sur la figure 4.

Le tableau de bord permet de compiler les informations essentielles à une aide à la décision concernant les opérations de gestion énergétique de l'ensemble aéronautique. Ces informations sont, entre autres, présentées sous forme de statuts des équipements, d'alertes, de rapports générés automatiquement, etc. Par exemple, le tableau de bord comprend les historiques des émissions et des économies réalisées, permet de faire des projections futures sur différents paramètres, permet à l'utilisateur d'enregistrer les causes racines des utilisations détectées comme sous optimales pour cibler les dysfonctionnements à régler par le principe de Pareto ou un principe analogue.

En raison de leur criticité, les alertes sont par exemple notifiées en temps réel à plusieurs acteurs simultanément (pilotes, opérateurs MRO, aéroports). Cette notification multicanal des alertes permet de maitriser les risques afférents aux anomalies ayant déclenché lesdites alertes et d'assurer une certaine redondance dans la vérification, surtout que la double vérification est souvent exigée auprès des autorités aériennes.

En référence à la figure 5, l'étape initiale 510 de collecte de données consiste à réunir une quantité importante de données (big data) provenant de différentes sources disponibles. En premier lieu, les données proviennent de l'ensemble aéronautique considéré et comprennent les paramètres mesurés en temps réel et en continu par les capteurs des différents équipements « connectés » (APU, GPU, ACU, etc.), les données propres au trafic aérien, les données provenant des aéroports, les données des compagnies aériennes, ainsi que toutes autres données contextuelles (météo, tarifications énergétiques, etc.) nécessaires à l'exécution de modèles de calcul spécifiques lors de l'étape de traitement 530.

Les sources principales des données sont représentées sur la figure 4 et regroupent des données aéronefs D10 (celles-ci comprenant naturellement des données équipements internes), des données équipements externes D30 et des données aéroports D20.

Bien entendu, certaines données peuvent être collectées en temps différé, à intervalles temporels réguliers ou sur requête de l'utilisateur.

Les données collectées sont ensuite transmises à la plateforme numérique de traitement, celle-ci comprenant des serveurs, physiques ou en nuage (cloud), accessibles sur un réseau de communication adapté.

L'étape 520 de transmission des données est de préférence réalisée en temps réel pour un suivi optimal des évolutions des différents paramètres de l'ensemble aéronautique. Cette transmission est nécessairement réalisée sur un canal ou des canaux sécurisés et peut faire appel à des techniques d'encodage ou de cryptage du signal, voire à une sécurisation par chaine de blocs (blockchain) permettant également d'horodater les données transmises avant leur traitement.

L'étape 530 de traitement des données consiste à exécuter une série de calculs et d'analyses en vue de rendre les données collectées exploitables et de permettre à l'utilisateur de prendre les actions nécessaires pour optimiser la gestion énergétique de l'ensemble aéronautique.

Cette étape de traitement est mise en œuvre par des moyens de calcul, de type ordinateur, de la plateforme numérique, implémentant, entre autres, des algorithmes d'intelligence artificielle pour réaliser des analyses prédictives.

Plus spécifiquement, des modèles d'apprentissage automatique permettent de prédire l'occurrence d'anomalies telles que des surconsommations énergétiques ou des pannes dans l'ensemble aéronautique, mais également de recommander des actions en se basant sur des historiques de données et d'interventions disponibles pour ledit ensemble ou provenant d'un autre ensemble aéronautique.

L'étape 530 de traitement des données permet également d'exécuter des calculs basés sur des modèles standard de consommation énergétique, d'émission de particules polluantes (CO₂, NOₓ), et analogues, pour par exemple estimer des coûts d'exploitation (carburant, taxes, etc.) et recommander des actions dans le but de réduire lesdits couts.

Les différents calculs opérés peuvent utiliser des données de géolocalisation des éléments de l'ensemble aéronautique afin d'affiner l'optimisation recherchée.

Par exemple, lorsque l'intervention d'un GPU est nécessaire sur un aéronef, la connaissance des coordonnées exactes dudit aéronef stationné et des différents GPU disponibles permet de choisir le GPU le plus proche ou celui remplissant des critères précis suivant un modèle collaboratif donné.

Les données d'activité d'un élément de l'ensemble aéronautique peuvent quant à elles être extraites des mesures du mouvement dudit élément (déplacement sur le tarmac par exemple) ou, lorsque ce dernier est immobile, des mesures d'un capteur de vibration installé dans l'élément et réglé sur un seuil de vibration correspondant à une activité effective.

Les mesures de vibration d'un élément, un APU par exemple, peuvent également être utilisées pour prédire des anomalies ou des pannes en analysant les profils vibratoires enregistrés.

Lors de l'étape de traitement des données, différents algorithmes peuvent être utilisés, parmi lesquels des algorithmes prédictifs tels que la méthode des moindres carrés ordinaire, des méthodes de régularisation, la méthode de Lasso, une régression logistique, une forêt d'arbres décisionnels, un gradient boosting, une machine à vecteurs de support, un algorithme du gradient stochastique, une méthode des k plus proches voisins ; et des algorithmes de classification et de partitionnement de données tels que les K-moyennes, le modèle de mélange gaussien, un partitionnement spectral, l'algorithme DBSCAN, un partitionnement interactif, une forêt d'isolement pour la détection d'anomalies, etc.

Les résultats des différents traitements sont ensuite affichés sur le tableau de bord lors de l'étape d'affichage 540.

Le tableau de bord est accessible depuis différents terminaux et permet à différents utilisateurs d'accéder à l'information en temps réel.

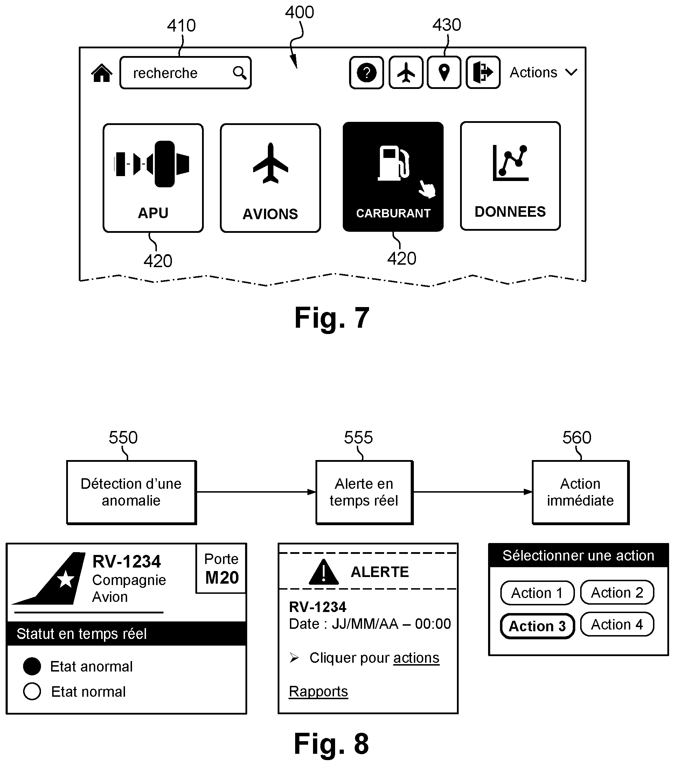

La figure 7 représente un exemple de page d'accueil d'un tableau de bord 400 accessible depuis une page web (accès sécurisé à un espace utilisateur).

Le tableau de bord 400 est une interface graphique adaptée à chaque utilisateur et comprenant des composants pour faciliter la navigabilité, l'accès à l'information et le suivi.

Globalement, ce tableau de bord comprend les rubriques principales de la gestion énergétique, indiquées par des onglets 420 à pictogrammes par exemple, ici APU, avions, carburant et données. Le tableau de bord 400 peut en outre avoir une barre de recherche 410 pour un accès rapide à une donnée spécifique, des boutons complémentaires 430 personnalisables, ainsi que tout autre composant ou outil d'interface simplifiant l'utilisation du tableau de bord.

Ainsi, le tableau de bord permet d'accéder aux différents traitements de données effectués, mais surtout de suivre en temps réel les cas d'alertes et de proposer à l'utilisateur un moyen de communication immédiate pour gérer ces alertes.

La figure 8 donne un exemple de fenêtres d'affichage accompagnant la gestion d'une alerte, de l'étape de détection 550 à l'étape d'action 560. L'alerte peut également être notifiée sur différents canaux pour un même utilisateur, par exemple à la fois sur une application mobile et par un message sur un réseau de téléphonie mobile (sms) pour pallier les absences ou coupures de connexion internet, connexion nécessaire au fonctionnement de l'application mobile.

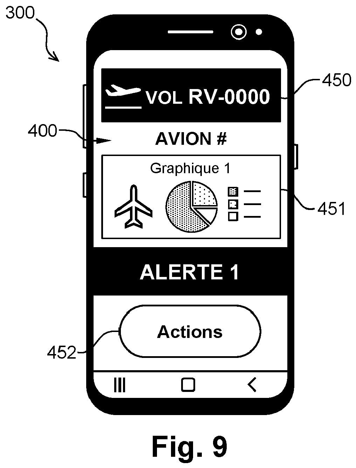

La figure 9 donne enfin un exemple de tableau de bord 400 pour application mobile, affiché sur un smartphone 300. Dans ce cas d'affichage réduit, le tableau de bord affiche de préférence une seule rubrique par fenêtre pour une meilleure lisibilité. Ici une rubrique d'avant-vol 450 est affichée avec les références du vol et de l'aéronef.

Une case d'information 451 peut être prévue pour montrer des données pertinentes en lien direct par exemple avec une alerte envoyée. Un menu actif 452 pour choisir des actions peut également s'afficher à l'écran en cas d'alerte.

L'homme du métier comprend aisément que le tableau de bord peut être adapté selon le besoin de chaque utilisateur.

Il ressort clairement de la présente description que certaines étapes du procédé peuvent être modifiées, remplacées ou supprimées et que certains ajustements peuvent être apportés à la mise en œuvre de ce procédé selon les objectifs visés, sans pour autant sortir du cadre de l'invention.

## Revendications

1. Procédé (500), mis en œuvre par ordinateur, pour optimiser la gestion énergétique et réduire les émissions de gaz à effet de serre d'un ensemble aéronautique (100) comprenant au moins un aéronef (10) et un groupe auxiliaire de puissance (11) dit APU, ledit procédé analysant, de façon centralisée à l'extérieur de l'ensemble aéronautique, des données provenant dudit ensemble pour comparer au moins un état d'un paramètre dudit ensemble à un état optimal prédéterminé dudit paramètre, ledit procédé étant **caractérisé en ce qu'**il comprend :
- une étape (510) de collecte de données, lesdites données comprenant des données mesurées par des capteurs (31, 111) de l'ensemble aéronautique ;
- une étape (520) de transmission des données collectées à une plateforme numérique (200) de traitement et d'analyse, extérieure à l'ensemble aéronautique ;
- une étape (530) de traitement des données par la plateforme, mettant en œuvre des algorithmes d'apprentissage automatique, pour prédire un état non optimal d'un paramètre dans l'ensemble aéronautique et/ou pour recommander des actions en vue d'amener l'état dudit paramètre au plus proche de l'état optimal ;
- une étape (540) d'affichage d'informations relatives aux données traitées sur un tableau de bord accessible via différents terminaux (300) ; et
- une étape (555) d'alerte en temps réel en cas de détection (550) d'une anomalie dans l'ensemble aéronautique.

2. Procédé selon la revendication 1, dans lequel l'étape (510) de collecte de données est réalisée en temps réel et en continu.

3. Procédé selon la revendication 1 ou 2, dans lequel les données mesurées comprennent des données provenant de l'APU (11) de chaque aéronef (10) de l'ensemble aéronautique (100).

4. Procédé selon l'une quelconque des revendications précédentes, dans lequel l'ensemble aéronautique (100) comprend, au moins pour une durée déterminée, au moins un équipement externe (30) tel qu'un groupe de puissance au sol GPU pourvu d'au moins un capteur (31) mesurant un paramètre fonctionnel, ledit équipement étant apte à communiquer avec la plateforme numérique (200) notamment pour transmettre les données mesurées par ledit capteur.

5. Procédé selon l'une quelconque des revendications précédentes, dans lequel l'étape (530) de traitement des données permet notamment de calculer une consommation énergétique, électrique et/ou fossile, d'un ou de plusieurs éléments de l'ensemble aéronautique (100), et d'estimer une émission de particules polluantes telles que le dioxyde de carbone (CO₂) et les oxydes d'azote (NOₓ) par l'aéronef (10).

6. Procédé selon l'une quelconque des revendications précédentes, dans lequel les algorithmes d'apprentissage automatique exécutés lors de l'étape (530) de traitement des données comprennent des modèles prédictifs configurés pour prédire des anomalies dans un élément de l'ensemble aéronautique (100) telles que des surconsommations énergétiques ou des pannes.

7. Procédé selon l'une quelconque des revendications précédentes, dans lequel la détection (550) d'une anomalie dans un élément de l'ensemble aéronautique (100) est basée sur une comparaison d'au moins une valeur mesurée pour un paramètre fonctionnel de l'élément avec au moins une valeur de référence correspondant à un fonctionnement optimal prédéterminé.

8. Procédé selon l'une quelconque des revendications précédentes, dans lequel l'étape (555) d'alerte s'accompagne d'une notification multicanal à différents utilisateurs.

9. Procédé selon l'une quelconque des revendications précédentes, dans lequel l'étape (560) de recommandation propose des actions différentes en fonction de la compétence et de l'habilitation de chaque utilisateur.

10. Plateforme numérique (200) comprenant des moyens informatiques de calcul et de stockage, et apte à communiquer sur un réseau sans-fil, **caractérisée en ce qu'**elle est configurée pour mettre en œuvre un procédé (500) d'optimisation de la gestion énergétique et de réduction des émissions de gaz à effet de serre d'un ensemble aéronautique (100), selon l'une quelconque des revendications précédentes.
